# EUROPEAN PATENT APPLICATION

(11) **EP 4 765 894 A1**
(43) Date of publication of application: **24.06.2026**
(21) Application number: 23948895.0
(22) Date of filing: 17.08.2023
(51) Int. Cl.: H04W 4/20

(54) **INFORMATION INDICATION METHOD, FIRST DEVICE, AND SECOND DEVICE**

(71) Applicant: GUANGDONG OPPO MOBILE TELECOMMUNICATIONS CORP., LTD., Dongguan, Guangdong 523860 (CN)
(72) Inventor: ZHENG, Xufei, Dongguan, Guangdong 523860 (CN)
(74) Representative: Penza, Giancarlo
(86) International application number: PCT/CN2023/113619
(87) International publication number: WO 2025/035468

(57) **Abstract**

The present application relates to an information indication method, a first device, a second device, a chip, a computer-readable storage medium, a computer program product, a computer program, and a communication system. The information indication method comprises: a first device sending first signaling to a second device, wherein the first signaling is used for indicating target model information in a first model information set, and the first model information set is configured on the basis of second signaling. By means of the embodiments of the present application, target model information can be flexibly and efficiently indicated.

## Description

### TECHNICAL FIELD

Embodiments of the present disclosure relate to the technical field of communication, and in particular to a communication method and apparatus, a device, a chip, a storage medium, a product, and a program.

### BACKGROUND

With the rapid development of Artificial Intelligence (AI) technology, the introduction of AI technology into wireless communication networks has become a topic having attracted widespread attention from academia and industry. AI models will play an important role in many parts of wireless communication systems. However, on the other hand, in communication systems, how to flexibly indicate a wide variety and huge number of AI models is an issue that needs to be considered.

### SUMMARY

The embodiments of the present disclosure provide an information indication method, which can flexibly and efficiently realize an indication of a model.

An embodiment of the present disclosure provides an information indication method, and the method includes the following operation.

A first device sends first signaling to a second device. The first signaling is used to indicate target model information in a first model information set, and the first model information set is configured based on second signaling.

An embodiment of the present disclosure provides an information indication method, and the method includes the following operation.

A second device receives first signaling from a first device. The first signaling is used to indicate target model information in a first model information set, and the first model information set is configured based on second signaling.

An embodiment of the present disclosure provides a first device, and the first device includes a first communication module.

The first communication module is configured to send first signaling to a second device. The first signaling is used to indicate target model information in a first model information set, and the first model information set is configured based on second signaling.

An embodiment of the present disclosure provides a second device, and the second device includes a second communication module.

The second communication module is configured to receive first signaling from a first device. The first signaling is used to indicate target model information in a first model information set, and the first model information set is configured based on second signaling.

An embodiment of the present disclosure provides a first device, and the first device includes a transceiver, a processor and a memory. The memory is used for storing a computer program, the transceiver is used for communicating with other devices, and the processor is used for calling and running the computer program stored in the memory to cause the terminal device to perform the information indication method described above.

An embodiment of the present disclosure provides a second device, and the second device includes a transceiver, a processor and a memory. The memory is used for storing a computer program, the transceiver is used for communicating with other devices, and the processor is used for calling and running the computer program stored in the memory to cause the network device to perform the information indication method described above.

An embodiment of the present disclosure provides a chip for implementing the information indication method described above.

Specifically, the chip includes a processor. The processor is used for calling and running a computer program in a memory, to cause a device on which the chip is mounted to perform the information indication method described above.

An embodiment of the present disclosure provides a computer readable storage medium, having stored thereon a computer program. When executed by a device, THE computer program causes the device to perform the information indication method described above.

An embodiment of the present disclosure provides a computer program product including computer program instructions. The computer program instructions cause a computer to perform the information indication method described above.

An embodiment of the present disclosure provides a computer program. When running on a computer, the computer program causes the computer to perform the information indication method described above.

In the embodiments of the present disclosure, the first model information set is configured through the second signaling, and on this basis, the first device sends the first signaling to the second device to indicate the target model information in the first model information set. Thus, the target model information can be flexibly and efficiently indicated by using two kinds of signaling.

### BRIEF DESCRIPTION OF THE DRAWINGS

FIG. 1 is a schematic diagram of an application scenario according to an embodiment of the present disclosure.
FIG. 2 is a schematic diagram of an AI-based communication transceiver.
FIG. 3 is a schematic flowchart of an information indication method according to an embodiment of the present disclosure.
FIG. 4 is a schematic flowchart of an information indication method according to another embodiment of the present disclosure.
FIG. 5 is a schematic diagram of a first model information set according to an embodiment of the present disclosure.
FIG. 6 is another schematic diagram of a first model information set according to an embodiment of the present disclosure.
FIG. 7 is a schematic diagram of multiple model information sets according to an embodiment of the present disclosure.
FIG. 8 is a schematic diagram of an overall configuration framework of model information according to an embodiment of the present disclosure.
FIG. 9 is a schematic diagram of configuration cycles of different signaling according to an embodiment of the present disclosure.
FIG. 10 is a schematic diagram of UE reporting model-related information according to an embodiment of the present disclosure.
FIG. 11 is a schematic diagram of UE reporting information related to a model switching capability according to an embodiment of the present disclosure.
FIG. 12 is a schematic diagram of a base station issuing model-related information according to an embodiment of the present disclosure.
FIG. 13 is a schematic diagram of a base station issuing information related to a model switching capability according to an embodiment of the present disclosure.
FIG. 14A is a schematic diagram illustrating an example of a base station and UE collaboratively completing model indication according to an embodiment of the present disclosure.
FIG. 14B is a schematic diagram illustrating another example of a base station and UE collaboratively completing model indication according to an embodiment of the present disclosure.
FIG. 15 is a schematic block diagram of a first device according to an embodiment of the present disclosure.
FIG. 16 is a schematic block diagram of a second device according to an embodiment of the present disclosure.
FIG. 17 is a schematic block diagram of a communication device according to an embodiment of the present disclosure.
FIG. 18 is a schematic block diagram of a chip according to an embodiment of the present disclosure.
FIG. 19 is a schematic block diagram of a communication system according to an embodiment of the present disclosure.

### DETAILED DESCRIPTION

Hereinafter, the technical solutions in the embodiments of the present disclosure will be described with reference to the accompanying drawings in the embodiments of the present disclosure.

The technical solution according to the embodiments of the present disclosure can be applied to various communication systems, such as a Long Term Evolution (LTE) system, an Advanced long term evolution (LTE-A) system, a New Radio (NR) system, an evolution system of an NR system, an LTE-based access to unlicensed spectrum (LTE-U) system, an NR-based access to unlicensed spectrum (NR-U) system, a Non-Terrestrial Networks (NTN) system, a Universal Mobile Telecommunication System (UMTS), Wireless Local Area Networks (WLAN), Wireless Fidelity (WiFi), a fifth-generation (5G) communication system, a sixth-generation (6G) communication system, or other communication systems, etc.

Generally speaking, the conventional communication system supports a limited number of connections and is easy to implement. However, with the development of communication technology, the mobile communication system will not only support conventional communication, but also support, for example, device-to-device (D2D) communication, machine-to-machine (M2M) communication, Machine Type Communication (MTC), vehicle-to-vehicle (V2V) communication, or vehicle-to-everything (V2X) communication, and the like. The embodiment of the present disclosure may also be applied to these communication systems.

In an implementation, the communication system according to the embodiment of the present disclosure may be applied to a Carrier Aggregation (CA) scenario, a Dual Connectivity (DC) scenario, or a Standalone (SA) network layout scenario.

In an implementation, the communication system in the embodiment of the present disclosure may be applied to an unlicensed spectrum, and the unlicensed spectrum may also be considered as a shared spectrum. Alternatively, the communication system in the embodiment of the present disclosure may also be applied to a licensed spectrum, and the licensed spectrum may also be considered as a non-shared spectrum.

The embodiments of the present disclosure describe various embodiments in view of a network device and a terminal device. The terminal device may also be referred to as User Equipment (UE), an access terminal, a subscriber unit, a subscriber station, a mobile station, a mobile flatform, a remote station, a remote terminal, a mobile device, a user terminal, a terminal, a wireless communication device, a user agent or a user apparatus, and the like.

The terminal device may be a station (ST) in a WLAN, may be a cellular telephone, a cordless telephone, a Session Initiation Protocol (SIP) telephone, a Wireless Local Loop (WLL) station, a Personal Digital Assistant (PDA) device, a handheld device having wireless communication capabilities, a computing device, or other processing device connected to a wireless modem, an in-vehicle device, a wearable device, a terminal device in a next generation communication system such as an NR network, or a terminal device in a future evolved Public Land Mobile Network (PLMN) network, or the like.

In an embodiment of the present disclosure, the terminal device may be deployed on land, including indoor or outdoor, handheld, wearable, or vehicle-mounted; it may also be deployed on the water (such as ships, etc.); it may also be deployed in the air (e.g. on aircraft, balloons and satellites, etc.).

In an embodiment of the present disclosure, the terminal device may be a Mobile Phone, a tablet (Pad), a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

As an example and not limitation, in an embodiment of the present disclosure, the terminal device may also be a wearable device. A wearable device can also be called a wearable smart device, which is a general term for wearable devices that are developed by applying a wearable technology to intelligently design daily wear, such as glasses, gloves, watches, clothing and shoes. A wearable device is a portable device that is worn directly on the body or is integrated into the user's clothes or accessories. Wearable devices are not only hardware devices, but also realize powerful functions through software support, data interaction and cloud interaction. Generalized wearable smart devices have full functions, a large size, and can realize complete or partial functions without relying on smart phones, for example, smart watches or smart glasses, as well as those that only focus on a certain type of application functions and need to be used in conjunction with other devices (for example, smart phones), such as various smart bracelets and smart jewelry for physical sign monitoring.

In an embodiment of the present disclosure, the network device may be a device for communicating with a mobile device, may be an Access Point (AP) in a WLAN. The network device may be an evolutionary Node B (eNB, or eNodeB) in LTE, or a relay station or access point, or a vehicle-mounted device, a wearable device, a network device (gNB) in an NR network, a network device in a future evolved PLMN network, or a network device in an NTN network, or the like.

As an example and not limitation, in an embodiment of the present disclosure, the network device may have mobile characteristics, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station provided on land, on a water area, or the like.

In an embodiment of the present disclosure, the network device may provide a service for a cell, and the terminal device communicates with the network device through a transmission resource (for example, frequency domain resource or spectrum resource) used by the cell. The cell may be a cell corresponding to the network device (for example, a base station), and the cell may belong to a macro base station, or belong to a base station corresponding to a small cell. The small cell here may include: a Metro cell, a Micro cell, a Pico cell, a Femto cell, etc. These small cells have the characteristics of small coverage and low transmission power, and are suitable for providing a high-speed data transmission service.

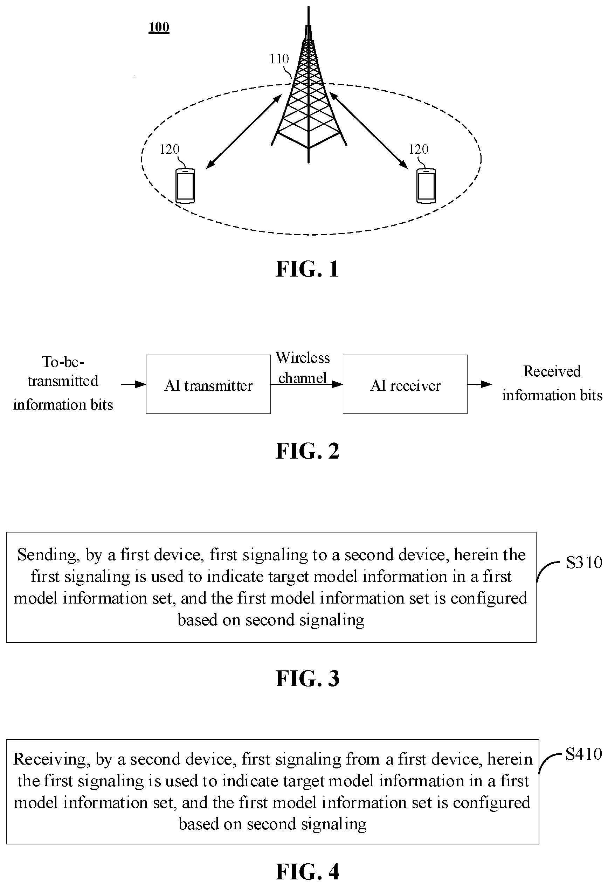

FIG. 1 exemplarily illustrates a communication system 100. The communication system includes a network device 110 and two terminal devices 120. In an implementation, the communication system 100 may include a plurality of network devices 110. The coverage range of each network device 110 may include another number of terminal devices 120, which is not limited in the embodiment of the present disclosure.

In an implementation, the communication system 100 may further include other network entities, such as a Mobility Management Entity (MME), an Access and Mobility Management Function (AMF), and the like. The embodiment of the present disclosure is not limited thereto.

The network device may further include an access network device and a core network device. That is, the wireless communication system further includes multiple core networks for communicating with an access network device. The access network device may be an evolutionary node B (abbreviated as eNB or e-NodeB), a macro base station, a micro base station (also referred to as a "small base station"), a pico base station, an access point (AP), a transmission point (TP) or a new generation Node B (gNodeB), or the like in a long-term evolution (LTE) system, a next radio (NR) system or an authorized auxiliary access long-term evolution (LAA-LTE) system.

It should be understood that a device having a communication function in the network/system in the embodiment of the present disclosure may be referred to as a communication device. Taking the communication system illustrated in FIG. 1 as an example, the communication device may include a network device and a terminal device having a communication function, and the network device and the terminal device may be specific devices in the embodiment of the present disclosure, and will not be described herein. The communication device may also include other devices in the communication system, for example, other network entities such as a network controller and a mobility management entity, but the embodiment of the present disclosure is not limited thereto.

It should be understood that the terms "system" and "network" are often used interchangeably herein. The term "and/or" herein is only an association relationship describing associated objects, and indicates that there may be three kinds of relationships. For example, A and/or B may indicate that A exists alone, A and B exist simultaneously, and B exists alone. In addition, the character "/" herein generally indicates that the associated objects are in an "or" relationship.

It should be understood that the "indicate" mentioned in the embodiments of the present disclosure may be a direct indication, an indirect indication, or may represent an associated relationship. For example, A indicates B, which may mean that A directly indicates B, for example, B can be acquired through A. It may also mean that A indirectly indicates B, for example, A indicates C, and B can be acquired through C. It may also mean that there is an associated relationship between A and B.

In the description of the embodiments of the present disclosure, the term "correspond" may represent that there is a direct correspondence or indirect correspondence relationship between the two, may represent that there is an association between the two, or may represent a relationship of indicating and being indicated, configuring and being configured, or the like.

In order to facilitate understanding the technical solutions of the embodiments of the present disclosure, the related technologies of the embodiments of the present disclosure will be described below. The related technologies below can be arbitrarily combined with the technical solutions of the embodiments of the present disclosure as options, and all of them belong to the protection scope of the embodiments of the present disclosure.

At present, research and discussion on the introduction of AI in the physical layer of wireless communication systems have started in the field of communications. In a wireless communication system, use cases attracting attention for AI include an AI-enhanced CSI (Channel State Information) compression feedback, an AI-enhanced beam management, and an AI-enhanced positioning. Looking further into the future, wireless AI will likely become one of the most important enabling technologies in 6G, and AI models will play an important role in many parts of wireless communication systems. But on the other hand, how to flexibly manage and control the wide variety and huge number of AI models will be an issue that needs to be considered in a future wireless system.

At present, the discussion of model management and indication is still in the preliminary stage, and there is only relatively simple consideration for the flexibility to be supported and the complexity of the scenarios to be handled. However, in the future, the wireless communication system needs to have a fully defined Life Circle Management (LCM) mechanism for AI model, which will support functions such as model indication, model switching, model performance monitoring, and model transmission. As the basis of the LCM for AI model, the model indication based on model ID will also be the focus of discussion.

Model indication in LCM is the key mechanism supporting LCM. Functions such as model selection, model switching, model activation/deactivation, etc. are actually based on model indication. With the AI based wireless communication system from the preliminary to indepth stages, the flexible and efficient model indication mechanism will play an increasingly important role.

The preliminary stage of AI transformation: based on the traditional wireless communication system, some important traditional functional modules are replaced or enhanced with AI models, to improve performance. For example, AI models are used to replace or enhance the related functional modules in the CSI compression feedback, beam management and positioning. At this stage, the impact of the AI model will only stay in a local part of the system, and its function is relatively single and easy to manage. However, compared with traditional algorithms, although AI has advantages in performance, its generalization ability to deal with different scenarios is much more fragile. Therefore, when facing different wireless communication environments and different system configurations, it is often necessary to select and switch to the most matching AI model to achieve the best performance. If the system does not support a flexible model indication mechanism, the above model selection and switching process will not be carried out in time, and the unsuitable model will damage the system performance and even cause communication interruption.

Maturity stage of AI transformation: AI models will not only partially replace traditional modules, but will be more widely used in various parts of the system, and even reconstruct the entire communication link, thereby realizing an intelligent endogenous communication system. A promising technical direction is a pure AI-based communication transceiver. FIG. 2 is a schematic diagram of an AI-based communication transceiver. As illustrated in FIG. 2, the transmitter and receiver parts of wireless communication are integrated by AI, and the whole can be regarded as an autoencoder (AE) model. The transmitter implemented based on the AI model acts as an encoder. The information bits are mapped to signals suitable for transmission in a wireless environment. The receiver implemented based on the AI model acts as a decoder, to restore the received signal into information bits. In this case, the AI models of the transmitter and receiver will be used as dual-ended models that match each other. When a model on an end is adjusted or switched, a model must on the other end should also be adjusted or switched accordingly, otherwise the mismatch of dual-ended models will lead to serious loss of communication performance or even communication interruption. Compared with the preliminary stage of AI transformation, the system at this stage will be filled with many AI models that need to be matched with each other and work together, which will need to support more refined control and management of AI models. For example, model switching to adapt to changes in the wireless environment at the preliminary stage may only need to be performed over a relatively long time period (e.g., second level, minute level, hour level), while the mature stage may need to support finer-grained model switching (e.g., millisecond level, slot level).

In conclusion, to cope with the development of future wireless communication systems and the diverse needs for AI model management, the system needs to support a flexible and efficient model indication function, which can efficiently support model indication under a long or short time granularity.

Specifically, the network and/or the UE may acquire or store one or more sets of AI models through a certain mechanism, and different models have model IDs bound thereto (which may be globally unique or locally unique). The network or the UE indicates/configures the model ID to the peer side through signaling, thereby realizing the model indication.

In a highly intelligent wireless communication system, a wide variety and huge number of AI models need to be managed. In the case of the wide variety of models, the Identifier of the model (such as model ID) is difficult to be represented by a small number of bits. This brings the following contradictions.

Though indicating the model ID by the lower layer control signaling, the flexibility of indication can be guaranteed. Since the sending period of the lower layer control signaling is short, the model indication in millisecond level and slot level can be supported. However, considering the length of the model ID, the lower layer control signaling may not have enough transmission resources to support it. Here, the lower layer control signaling is, for example, DCI, UCI, or the like.

When the model ID is indicated by the higher-layer control signaling, even if the signaling transmission resources required for a long model ID can be sufficiently satisfied, it is difficult to guarantee the flexibility of the indication. Since the configuration cycle of high-layer signaling is long, it is difficult to support the model indication in millisecond level and slot level. Here, the higher-layer control signaling is, for example, RRC signaling.

The technical solution according to the embodiments of the present disclosure is mainly to solve the above technical problems.

FIG. 3 is a schematic flowchart of an information indication method according to an embodiment of the present disclosure. The method may optionally be applied to the system illustrated in FIG. 1, but is not limited thereto. The method includes the following operation.

In S310, a first device sends first signaling to a second device. The first signaling is used to indicate target model information in a first model information set, and the first model information set is configured based on second signaling.

Corresponding to the above method, FIG. 4 is a schematic flowchart of an information indication method according to another embodiment of the present disclosure. The method may optionally be applied to the system illustrated in FIG. 1, but is not limited thereto. The method includes the following operation.

In S410, a second device receives first signaling from a first device. The first signaling is used to indicate target model information in a first model information set, and the first model information set is configured based on second signaling.

In an embodiment of the present disclosure, the first device may be a terminal device or a network device. Accordingly, the second device may be a network device or a terminal device. Optionally, the first device is a terminal device, and the second device is a network device. Alternatively, the first device is a network device, and the second device is a terminal device.

In an embodiment of the present disclosure, the first model information set may include multiple pieces of model information. Each piece of model information may correspond to one model, and the model information is used to describe its corresponding model. For example, the model information may include an Identifier (ID) of the model. Here, the model refers to a model for implementing a specific function in a wireless communication system. Optionally, the model may be an AI/Machine Learning (ML) model.

It should be understood that in the embodiment of the present disclosure, the model information set may also be referred to as a model information candidate set, a model information candidate pool, a model information list, or the like.

Optionally, the target model information may be specific model information among multiple pieces of model information, for example, model information corresponding to a model selected by the first device, or model information corresponding to a model activated/deactivated by the first device.

Optionally, the number of target model information may be one or more.

In an embodiment of the present disclosure, the first model information set is configured based on the second signaling. In other words, the first device and the second device determine the first model information set by transmitting the second signaling, that is, the confirmation/agreement of the first model information set by both ends is realized through the second signaling. Optionally, the second signaling may be sent from the first device to the second device, or may be sent the second device to the first device.

Optionally, the first signaling may be used to indicate the target model information in the first model information set. In other words, the first signaling is used for the second device to determine the target model information in the first model information set.

According to the embodiment of the present disclosure, based on configuring the first model information set through the second signaling, the target model information in the first model information set is indicated through the first signaling. Thus, the first signaling can indicate the target model information within a small range without excessive transmission resource overhead, and can be sent more frequently, thereby ensuring the flexibility of model indication. Specifically, when it needs to implement the model indication quickly and at a high frequency, the target model information may be indicated from the first model information set by using a small number of bits through the first signaling. When the model candidate range changes on a large scale, it can be updated through the second signaling, thus taking into account the flexibility of model indication and the requirement for large-scale model indication.

The above method can be applied to scenarios such as model selection, model switching, model activation and deactivation. For example, multiple CSI feedback models are configured for a terminal device in a network. Through indicating one of the CSI feedback models, the terminal device is caused to switch to use the CSI feedback model.

In some embodiments, a sending period of the first signaling is less than or equal to a sending period of the second signaling. Here, the sending period may also be referred to as a configuration period. Exemplarily, the sending period of the first signaling may be in millisecond level or slot level. The transmission period of the second signaling may be several times, tens of times, or the like of the transmission period of the first signaling.

It should be noted that the sending period is used to represent the minimum time interval for sending signaling, but does not limit the need for periodic sending of signaling. For example, the transmission period of the first signaling is 1 millisecond, which means that the first signaling can be sent every one millisecond. That is, the system supports the millisecond-level transmission of the first signaling, but in practical applications, it is possible to determine whether to send the first signaling according to the requirements of the scenario.

In some embodiments, the first signaling may be lower layer control signaling, and the second signaling may be higher layer control signaling. For example, the lower layer configuration signaling is Downlink Control Information (DCI), Uplink Control Information (UCI), or the like; the higher layer configuration signaling is a MAC CE (MAC Control Element), a Radio Resource Control (RRC) signaling, or the like.

In some embodiments, the first signaling may be dynamic signaling, and the second signaling may be semi-static signaling.

Exemplarily, the first signaling includes DCI, UCI, or a first MAC CE.

Exemplarily, the second signaling includes RRC signaling and/or a second MAC CE.

For example, the second signaling includes RRC signaling, and the first signaling is DCI or UCI. That is, after the first model information set is configured through the RRC signaling, the target model information in the first model information set is indicated through the DCI or UCI.

For another example, the second signaling is an MAC CE, and the first signaling is DCI or UCI. That is, after the first model information set is configured through the MAC CE, the target model information in the first model information set is indicated through the DCI or UCI.

For another example, the second signaling is RRC signaling, and the first signaling is an MAC CE. That is, after the first model information set is configured through the RRC signaling, the target model information in the first model information set is indicated through the MAC CE.

For another example, the second signaling is a second MAC CE, and the first signaling is a first MAC CE. That is, after the first model information set is configured through the second MAC CE, the target model information in the first model information set is indicated through the first MAC CE.

For another example, the second signaling includes RRC signaling and an MAC CE, and the first signaling is DCI or UCI. That is, after the first model information set is configured through the combination of the RRC signaling and MAC CE, the target model information in the first model information set is indicated through DCI or UCI.

For another example, the second signaling includes RRC signaling and a second MAC CE, and the first signaling is a first MAC CE. That is, after the first model information set is configured through the combination of the RRC signaling and second MAC CE, the target model information in the first model information set is indicated through the first MAC CE.

In some embodiments, the second signaling includes the first model information set. Each piece of model information in the first model information set includes an ID of a model corresponding to the piece of model information.

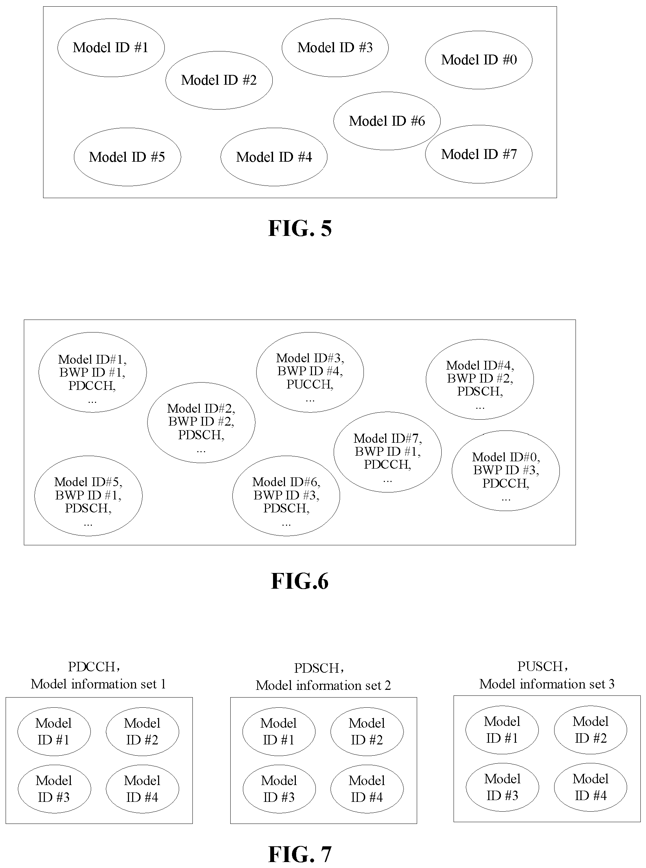

That is, the second signaling may carry a complete first model information set, which includes IDs of multiple models. FIG. 5 is a schematic diagram of a first model information set according to an embodiment of the present disclosure. As illustrated in FIG. 5, the model information set configured through the second signaling may include IDs of multiple models.

Optionally, in combination with the foregoing embodiments, the second signaling includes higher layer control signaling such as RRC and/or MAC CE. For a large number of model IDs with lengthy information, the required transmission resources can be sufficiently satisfied.

In some embodiments, each piece of model information further includes attribute information of the model corresponding to the piece of model information.

Optionally, the attribute information includes at least one of the following.

### Information 1: Functional information of the model

Exemplarily, the functional information of the model may be used to indicate or describe the function of the model. The functions of the model include CSI feedback, beam management, positioning, channel estimation or signal detection, etc.

### Information 2: Frequency domain interval applicable to the model

Exemplarily, the frequency domain interval applicable to the model may refer to a Bandwidth Part (BWP) applicable to the model. Optionally, the ID of the BWP applicable to the model may be used to indicate the frequency domain interval applicable to the model.

### Information 3: Spatial domain interval applicable to the model

Exemplarily, the spatial domain interval applicable to the model may be a beam applicable to the model. Optionally, a Transmission Configuration Indicator (TCI) state may be used to indicate a spatial domain interval applicable to the model.

### Information 4: Logical channel applicable to the model

Exemplarily, the logical channel applicable to the model may include one or more of: a Physical Downlink Control Channel (PDCCH), a Physical Downlink Shared Channel (PDSCH), a Physical Broadcast Channel (PBCH), a Physical Uplink Control Channel (PUCCH), a Physical Uplink Control Channel (PUSCH), or a Physical Random Access Channel (PRACH).

It should be noted that in the embodiment of the present disclosure, the attribute information in the model information may include one or more of the above-described information. For example, the attribute information may include only functional information, an applicable frequency interval, an applicable spatial domain interval, or an applicable logical channel; the attribute information may include functional information and an applicable frequency interval; or the attribute information may include functional information and an applicable logical channel, or the like. In practical applications, it can be implemented according to scenario requirements, system conventions, etc., which are not listed here.

FIG. 6 illustrates another schematic diagram of a first model information set according to an embodiment of the present disclosure. As illustrated in FIG. 6, the model information set configured through the second signaling may further include attribute information of each model. FIG. 6 illustrates an applicable BWP ID and an applicable logical channel as an example.

In some embodiments, the first signaling includes an index of the target model information in the first model information set. Since the number of model information in the first model information set is limited, compared with carrying the target model information itself (including ID, attribute information, etc.), indicating the target model information through carrying, by the first signaling, the index of the target model information in the first model information set can greatly reduce the overhead of transmission resources , and thus can realize high-frequency transmission, which is beneficial to realizing timely, efficient and flexible model indication.

For example, as illustrated in FIGS. 5 and 6, the first model information set includes eight pieces of model information, which can be indicated by index 0 to index 7. Thus, the indication of target model information can be realized by using 3 bits.

In some embodiments, the second signaling includes multiple model information sets corresponding to different attribute information, and the multiple model information sets include the first model information set.

That is, the second signaling may be used to configure multiple model information sets including the first model information set. Different model information sets have different attribute information, for example, different applicable BWPs, different applicable logical channels, and the like.

Exemplarily, the second signaling is used to configure different model information sets for different frequency domain intervals, for example, different model information sets for different BWPs.

Exemplarily, the second signaling is used to configure different model information sets for different logical channels, for example, different model information sets for PDCCH, PDSCH, PBCH, PUCCH, PUSCH, PRACH, and the like, respectively.

Exemplarily, the second signaling is used to configure different model information sets for different model functions, for example, different model information sets for CSI feedback, beam management, positioning, channel estimation, signal detection, and the like, respectively.

FIG. 7 is a schematic diagram of multiple model information sets according to an embodiment of the present disclosure. Taking the configuration of different model information sets for different logical channels as an example, multiple model information sets may include a model information set 1 configured for PDCCH, a model information set 2 configured for PDSCH, and a model information set 3 configured for PUSCH.

In some embodiments, the first signaling includes a plurality of fields, the plurality of fields correspond to the plurality of model information sets one-to-one, and a first field corresponding to the first model information set in the plurality of fields is used to indicate the target model information.

Optionally, each of the multiple fields is used to indicate the target model information in the model information set corresponding to the field. The correspondence relationship between the field and the model information set may be pre-configured.

Taking the multiple model information sets illustrated in FIG. 7 as an example, the first signaling may include a first field corresponding to the model information set 1, a second field corresponding to the model information set 2, and a third field corresponding to the model information set 3. The first field is used to indicate the model ID # 3 in the model information set 1, the second field is used to indicate the model ID # 4 in the model information set 2, and the third field is used to indicate the model ID # 1 in the model information set 3.

In some embodiments, the first signaling includes a plurality of fields corresponding to different attribute information, and the target model information corresponds to attribute information to which a first field in the plurality of fields corresponds.

In other words, the attribute information corresponding to the target model information is attribute information corresponding to one of the plurality of fields. Optionally, if the first field corresponding to the target attribute information indicates the target model information, the attribute information of the model corresponding to the target model information is the target attribute information.

The correspondence relationship between the field and the attribute information may be pre-configured. Optionally, each of the plurality of fields is used to indicate, for attribute information corresponding to the field, model information corresponding to the attribute information in the first model information set.

Exemplarily, in case that only one model information set (the first model information set) is configured in the second signaling, the model information may be indicated for different functions, different frequency domain/spatial domain intervals, or different logical channels through a plurality of fields in the first signaling, respectively.

Taking the first model information set illustrated in FIG. 5 as an example, the first model information set is configured by the second signaling, and the first signaling may include a first field corresponding to a CSI feedback function and a second field corresponding to a beam management function. The first field indicates the model ID # 1, representing that the model ID # 1 is used for CSI feedback. The second field indicates the model ID # 4, representing that the model ID # 4 is used for beam management.

Alternatively, the first signaling may include a first field corresponding to the PDCCH, a second field corresponding to the PDSCH, and a third field corresponding to the PUSCH. Here, the first field indicates the model ID # 1, representing that the model ID # 1 is used for the PDCCH. The second field indicates the model ID # 4, representing that the model ID # 4 is used for the PDSCH. The third field indicates the model ID # 4, representing that the model ID # 4 is also used for the PUSCH.

In some embodiments, the first field carries the index of the target model information in the first model information set. In other words, the value of the first field is used to indicate the index of the target model information in the first model information set.

Optionally, each of the plurality of fields may carry an index of the specific model information in the corresponding model information set. In this way, the overhead of transmission resources can be reduced.

In some embodiments, the second signaling may include first configuration signaling and second configuration signaling. The first configuration signaling is used to configure a second model information set, and the second configuration signaling is used to determine the first model information set from the second model information set.

That is, the second signaling may include multiple different signaling, to realize the configuration of the first model information set through a multi-level configuration, which is beneficial to further balance the flexibility of model indication and the large-scale indication requirement of the model.

In some embodiments, a sending period of the second configuration signaling is less than or equal to a sending period of the first configuration signaling.

Exemplarily, the second configuration signaling may be RRC signaling, the first configuration signaling may be an MAC CE, and the first signaling may be DCI or UCI.

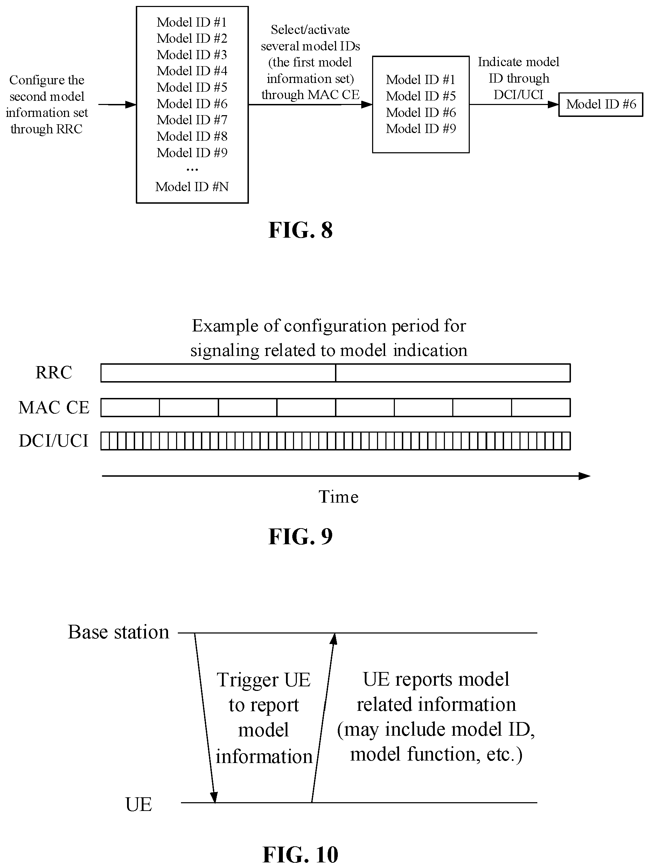

FIG. 8 is a schematic diagram of an overall configuration framework of model information according to an embodiment of the present disclosure. As illustrated in FIG. 8, firstly, a second model information set (e.g., model IDs # 1 to N) that may include a plurality of model IDs is configured through RRC signaling. Then, the MAC CE is used to select/activate several model IDs (such as model ID # 1/5/6/9), that is, the first model information set, from the second model information set configured through the RRC. Then, through DCI/UCI signaling, the final target model information (such as model ID # 6) is indicated from the first model information set selected by the MAC CE.

In the above example, when fast and high-frequency model switching is required (e.g., millisecond level, slot level), through DCI/UCI, only a small number of bits need to be used to indicate the model within the model candidate range configured by the higher layer. Only when the model candidate range changes on a large scale, it needs to be updated through high-layer signaling (MAC CE or even RRC). Further, for the model indication, the configuration periods of the related signaling such as RRC, MAC CE, DCI/UCI may be different. FIG. 9 exemplarily illustrates the configuration periods of different signaling.

In some embodiments, the first model information set includes activated model information in the second model information set. Exemplarily, the first configuration signaling is used to configure the second model information set, the second configuration signaling is mainly used to activate all or part of the model information in the second model information set, and the first signaling may indicate the target model information in the activated all or part of the model information, thereby further reducing the overhead of the first signaling indication.

In some embodiments, the first model information set includes: model information that is configured for first attribute information, in the second model information set. In other words, in the second model information set, the second configuration signaling is used to configure the first model information set for the first attribute information.

Optionally, the second signaling may include multiple second configuration signaling, to configure multiple model information sets for multiple attribute information. For example, different model information sets are configured for different frequency domain intervals (e.g., different BWPs), or different model information sets are configured for different spatial domain intervals (e.g., different downlink or uplink beams), or different model information sets are configured for different logical channels, or different model information sets are configured for different model functions.

For example, after the second model information set is configured by RRC signaling, for the CSI feedback function, the model information set corresponding to the CSI feedback function may be indicated from the second model information set by the third MAC CE; the model information set corresponding to beam management may be indicated from the second model information set by the fourth MAC CE.

Optionally, the second configuration signaling may further include an indication of the first attribute information, for example, including an Logical Channel Identifier (LCID), an ID of a BWP, an ID of a TCI, and the like. For example, when the second configuration signaling is used to configure the first model information set applicable to the PDCCH, the second configuration signaling may further include indication information for the PDCCH.

Optionally, in an embodiment of the present disclosure, the first configuration signaling may be sent from the second device to the first device, or may be sent from the first device to the second device. Specifically, before the first device sends the first signaling to the second device, the above method may further include the following operation.

The first device receives the second configuration signaling from the second device.

Alternatively, the first device sends the second configuration signaling to the second device.

Accordingly, before the second device receives the first signaling from the first device, the above method may further include the following operation.

The second device sends the second configuration signaling to the first device.

Alternatively, the second device receives the second configuration signaling from the first device.

Optionally, in the embodiment of the present disclosure, the second configuration signaling may be sent from the second device to the first device, or may be sent from the first device to the second device. Specifically, before the first device sends the first signaling to the second device, the above method may further include the following operation.

The first device receives the first configuration signaling from the second device.

Alternatively, the first device sends the first configuration signaling to the second device.

Accordingly, before the second device receives the first signaling from the first device, the above method may further include the following operation.

The second device sends the first configuration signaling to the first device.

Alternatively, the second device receives the first configuration signaling from the first device.

It can be seen that according to the embodiment of the present disclosure, the first device and the second device can cooperatively and interactively complete the model indication, and the system implementation can have a greater freedom.

In some embodiments, before the second device receives the first signaling from the first device, the above method further includes that: the second device sends first information to the first device. The first information includes: information related to at least one model in the second device, and/or information related to an ability of the second device to perform model switching within the at least one model; and the at least one model includes a model corresponding to the target model information.

Accordingly, in some embodiments, before the first device sends the first signaling to the second device, the above method further includes that: the first device receives the first information from the second device.

The first information includes information related to at least one model in the second device. That is, before the first device indicates the target model information to the second device, the second device may firstly report the information related to the model held by itself, so that the first device has some knowledge of the model held by the second device.

The first information includes information related to the capability of the second device to perform model switching within at least one model. That is, before the first device indicates the target model information to the second device, the second device may firstly report the information related to the model switching capability, so that the first device determines the capability of the second device, and thus reasonably indicates the applicable target model information for the second device. Exemplarily, the model switching capability may include a time length required for the second device to perform the model switching.

Optionally, the first information may be carried by an RRC, a PUCCH, a PUSCH, an MAC CE, a DCI, or the like.

Optionally, the first device may determine the target model information according to the first information, and then indicate the target model information to the second device.

In order to facilitate understanding of the method in the above-described embodiments, multiple application examples are provided below, taking the interaction between the base station and the UE as an example, so as to clearly demonstrate an optional implementation of the method according to the timing of respective operations.

### First application example

In this application example, the first device is a base station and the second device is UE, that is, the base station indicates a model to the UE.

In many cases, the base station needs to issue an AI model indication to the UE, so as to help the UE complete model selection and handover to achieve better communication performance. For example, when the model used by the UE is no longer suitable for the current scenario, the model needs to be switched; or when the base station and the UE are working together by using a dual-end model (such as the AI transmitter and AI receiver illustrated in FIG. 2), and the base station switches to a different base station model, the UE side also needs to be adjusted accordingly.

### S1, preparation stage of model indication

As a prerequisite for model indication, the UE needs to acquire or store one or more sets of AI models. The acquisition method of AI model on the UE side may include the following manners.
(1) The base station provides the AI model: The base station itself holds the trained model, and sends and configures it to the UE (for example, through a RRC message, through broadcast configuration, through a PDCCH or PDSCH, etc.).
(2) Manufacturer predefinition: UE and base station manufacturers have each predefined the AI model and ID they need to use.
(3) The AI model is acquired through a third-party channel or agreement.

Before performing model indication, it is necessary to ensure that the base station has an understanding of the model held by the UE and its related information (such as ID, model function, etc.). The information can be realized by UE reporting (for example, through RRC, a PUCCH, a PUSCH, etc.). FIG. 10 is a schematic diagram of UE reporting model-related information.

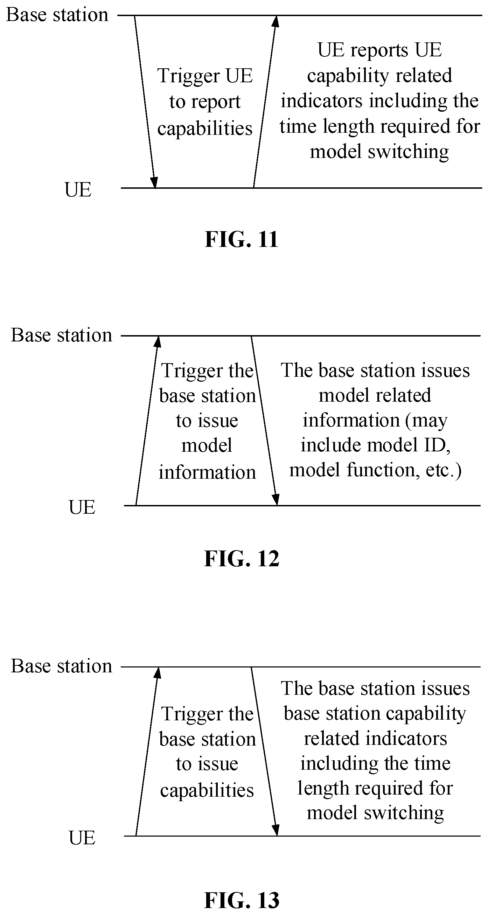

In addition, the UE needs a certain adjustment time to complete the model switching, and the time length is related to the UE capability. The base station needs to know this time length, so that the base station can estimate and obtain how long it takes for the UE to complete the switching after the model indication signaling is issued. Therefore, the base station needs the UE to report this time length. FIG. 11 is a schematic diagram of UE reporting information related to a model switching capability.

### S2, configuring model information set through RRC signaling

The base station may configure no more than N (N is an integer greater than or equal to 1) model IDs to the UE through RRC signaling, to form a model information set. The single element in the model information set may:
(1) contain only the model ID (as illustrated in FIG. 5);
(2) contain the model ID and one or more of the following information (as illustrated in FIG. 6):
   a model function indication (indicating the functional classification of the model, such as CSI feedback, beam management, positioning, channel estimation, signal detection, etc.) or description;
   a frequency domain interval applicable to the model (e.g., may be indicated by the BWP ID);
   a spatial domain interval applicable to the model (for example, which beam/beams applicable to the model, e.g., may be indicated by a TCI status);
   a logical channel applicable to the model (e.g., a PDCCH, PDSCH, PBCH, PUCCH, PUSCH, PRACH, etc.).

The base station may configure multiple mutually independent model information sets through RRC, and different sets may correspond to different frequency domain/spatial domain intervals or logical channels, respectively, or may correspond to different model types or functions (as illustrated in FIG. 7).

Different model information sets are configured for different BWPs.

Different model information sets are configured for different downlink or uplink beams.

Different model information sets are configured for different logical channels (e.g., PDCCH, PDSCH, PBCH, PUCCH, PUSCH, PRACH, etc.).

Different model information sets are configured for different model functions (such as CSI feedback, beam management, positioning, channel estimation, signal detection, etc.).

The base station may configure only one common model information set, which is not bound to the limiting factors (attribute information) such as BWP, logical channel, beam, etc.. The specification of limiting factors can be completed by lower layer signaling (such as an MAC CE or DCI).

When only one piece of model information is included in the model information set configured through the RRC, the model indication is completed only by RRC signaling, and no further indication through MAC CE and/or DCI signaling is required.

### S3, select/activate several model IDs from the model information set through MAC CE signaling

On the basis of the model information set configured through the RRC, the base station may activate no more than M (M is an integer greater than or equal to 1, and M is less than or equal to N) model IDs therefrom through MAC CE signaling.

In case that there are multiple mutually independent model information sets configured through RRC (different sets correspond to different frequency domain/spatial domain intervals or logical channels, model functions, etc., respectively), the base station may respectively select/activate no more than M models from different sets through MAC CE signaling. The numbers of specific activated/selected models corresponding to different model information sets may be different.

In case that there is only one single, common model information set, the base station may respectively activate/select no more than M models for different frequency domain/spatial domain intervals or logical channels, or models corresponding to different model types or functions through MAC CE signaling.

Different model information sets are configured for different BWPs.

Different model information sets are configured for different downlink or uplink beams.

Different model information sets are configured for different logical channels (e.g., PDCCH, PDSCH, PBCH, PUCCH, PUSCH, PRACH, etc.).

Different model information sets are configured for different model functions (such as CSI feedback, beam management, positioning, channel estimation, signal detection, etc.).

The different intervals/channels/model functions are embodied through MAC CE signaling (e.g. distinguished by LCID, or indication fields such as BWP ID/TCI ID included in MAC CE).

When the model activated/selected through the MAC CE from the model information set includes only one candidate model, the model indication is completed only through RRC and MAC CE signaling, and no further indication through DCI signaling is required.

### S4, complete model ID indication through DCI

The base station may directly activate/select, through the DCI, a model in the model information set configured through the RRC (skipping MAC CE signaling, i.e., model ID indication is jointly completed through RRC and DCI). Alternatively, the base station may indicate, through the DCI, a final model in the models selected through the MAC CE (i.e., model ID indication is jointly completed through RRC, an MAC CE, and DCI).

In case that there are multiple model information sets configured through RRC or MAC CE (different sets correspond to different frequency domain/spatial domain intervals or logical channels, model functions, etc., respectively), the base station may use different fields of the DCI to respectively indicate models therefrom.

In case that there is only one single, common model information set, the base station may respectively indicate, through different fields of DCI signaling, models for different frequency domain/spatial domain intervals or logical channels, or models corresponding to different model types or functions.

### Second application example

In this application example, the first device is UE, and the second device is a base station, that is, the base station indicates a model to the UE.

As a case corresponding to the first application example, as a decision-making party, the UE may instruct the base station to complete model selection and switching, so as to achieve better communication performance. For example, the base station and the UE are working together by using a dual-end model (as illustrated in FIG. 2), and the UE switches to a different UE model, so the base station side also needs to be adjusted accordingly. Alternatively, the UE determines which model can be adopted by the base station to achieve the best performance through some method, so the UE needs to indicate to the base station.

### S1, preparation stage of model indication

As a prerequisite for model indication, assuming that the base station has acquired or stored one or more sets of AI models, the acquisition method of AI model on the base station side may include the following manners.
(1) UE provides the AI model: the UE uploads the trained model to the base station (for example, through a RRC message, an MAC CE, a PUCCH, a PUSCH, etc.).
(2) Manufacturer predefinition: UE and base station manufacturers have each predefined the AI model and ID they need to use.
(3) The AI model is acquired through a third-party channel or agreement.

Before performing model indication, it is necessary to ensure that the UE has an understanding of the model held by the base station and its related information (such as ID, model function, etc.). The information can be realized by base station issuing (for example, through RRC, an MAC CE, DCI, etc.). FIG. 12 is a schematic diagram of a base station issuing model-related information.

In addition, the base station needs a certain adjustment time to complete the model switching, and the time length is related to the capability of the base station. The UE needs to know this time length, so that the UE can estimate and obtain how long it takes for the base station to complete the switching after the model indication signaling is issued. Therefore, the UE needs the base station to issue this time length. FIG. 13 is a schematic diagram of a base station issuing information related to a model switching capability.

### S2, configuring model information set through RRC signaling

The UE may configure no more than N (N is an integer greater than or equal to 1) model IDs to the base station through RRC signaling, to form a model information set. The single element in the model information set may:
(1) only contain the model ID (as illustrated in FIG. 5);
(2) contain the model ID and one or more of the following information (as illustrated in FIG. 6):
   a model function indication (indicating the functional classification of the model, such as CSI feedback, beam management, positioning, channel estimation, signal detection, etc.) or description;
   a frequency domain interval applicable to the model (e.g., may be indicated by the BWP ID);
   a spatial domain interval applicable to the model (for example, which beam/beams applicable to the model, e.g., may be indicated by a TCI status);
   a logical channel applicable to the model (e.g., a PDCCH, PDSCH, PBCH, PUCCH, PUSCH, PRACH, etc.).

The UE may configure multiple mutually independent model information sets through RRC, and different sets may correspond to different frequency domain/spatial domain intervals or logical channels, respectively, or may correspond to different model types or functions.

Different model information sets are configured for different BWPs.

Different model information sets are configured for different downlink or uplink beams.

Different model information sets are configured for different logical channels (e.g., PDCCH, PDSCH, PBCH, PUCCH, PUSCH, PRACH, etc.).

Different model information sets are configured for different model functions (such as CSI feedback, beam management, positioning, channel estimation, signal detection, etc.).

The UE may configure only one common model information set, which is not bound to the limiting factors such as BWP, logical channel, beam, etc.. The specification of the limiting factors can be completed by lower layer signaling (such as MAC CE or UCI).

When only one candidate model is included in the model information set configured through RRC, the model indication is completed only through RRC signaling, and no further indication through MAC CE and/or UCI signaling is required.

### S3, select/activate several model IDs from the model information set through MAC CE signaling

On the basis of the model information set configured through the RRC, the UE may activate no more than M (M is an integer greater than or equal to 1, and M is less than or equal to N) model IDs therefrom through MAC CE signaling.

In case that there are multiple mutually independent model information sets configured through RRC (different sets correspond to different frequency domain/spatial domain intervals or logical channels, model functions, etc., respectively), the UE may respectively select/activate no more than M models from different sets through MAC CE signaling. The numbers of specific activated/selected models corresponding to different model information sets may be different.

In case that there is only one single, common model information set, the UE may respectively activate/select, through MAC CE signaling, no more than M models for different frequency domain/spatial domain intervals or logical channels, or models corresponding to different model types or functions.

Different model information sets are configured for different BWPs.

Different model information sets are configured for different downlink or uplink beams.

Different model information sets are configured for different logical channels (e.g., PDCCH, PDSCH, PBCH, PUCCH, PUSCH, PRACH, etc.).

Different model information sets are configured for different model functions (such as CSI feedback, beam management, positioning, channel estimation, signal detection, etc.).

The different intervals/channels/model functions are embodied through MAC CE signaling (e.g. distinguished by LCID, or indication fields such as BWP ID/TCI ID included in MAC CE).

When the model activated/selected through the MAC CE from the model information set includes only one candidate model, the model indication is completed only through RRC and MAC CE signaling, and no further indication through UCI signaling is required.

### S4, complete model ID indication through UCI

The UE may directly activate/select, through the UCI, a model in the model information set configured through the RRC (i.e., model ID indication is jointly completed through RRC and UCI). Alternatively, the base station may indicate, through the UCI, a final model in the models selected through the MAC CE (i.e., model ID indication is jointly completed through RRC, MAC CE, and UCI).

In case that there are multiple model information sets configured through RRC or MAC CE (different sets correspond to different frequency domain/spatial domain intervals or logical channels, model functions, etc., respectively), the UE may use different fields of the UCI to respectively indicate models therefrom.

In case that there is only one single, common model information set, the UE may respectively indicate, through different fields of UCI signaling, models for different frequency domain/spatial domain intervals or logical channels, or models corresponding to different model types or functions.

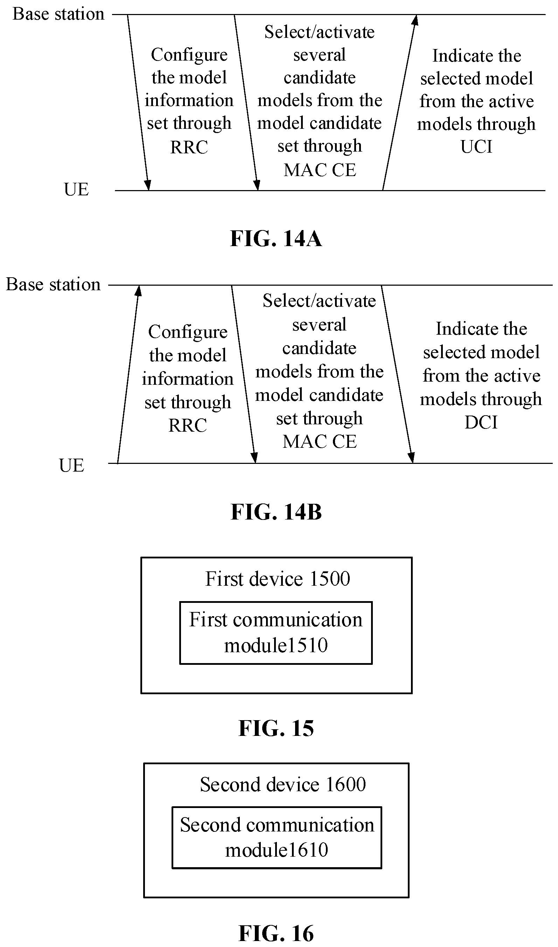

In the above first and second application examples, the indication of the model is completed independently by the base station or the UE. In other application examples, the base station and UE can cooperatively and interactively complete the model indication, which will bring greater freedom to the system and is also a possible development direction. Possible examples of existence include, but are not limited to the following.
(1) The base station configures the model information set through RRC signaling, then selects/activates several candidates from the model information set through MAC CE signaling, and the UE completes the model indication through UCI (as illustrated in FIG. 14A).
(2) The UE configures the model information set through RRC signaling, the base station selects/activates several candidates from the model information set through MAC CE signaling, and then completes the model indication through DCI (as illustrated in FIG. 14B).
(3) The base station configures the model information set through RRC signaling, and the UE selects/activates several candidates from the model information set through MAC CE signaling. Then, the base station completes the model indication through DCI.
(4) The base station configures the model information set through RRC signaling, and the UE completes the model indication through UCI.

In view of the above application examples, it can be seen that the hierarchical information indication method proposed in the present disclosure can better balance the contradiction between the flexibility of model indication and the overhead of transmission resources, and take into account the efficiency and flexibility of model indication signaling. When fast and high-frequency model switching is needed (e.g., millisecond level, slot level), through the first signaling, only a small number of bits need to be used to indicate the model within the model candidate range configured through the second signaling. Only when the model candidate range changes on a large scale, it needs to be updated through the second signaling.

FIG. 15 is a schematic block diagram of a first device 1500 according to an embodiment of the present disclosure. The first device 1500 may include a first communication module 1510.

The first communication module 1510 is configured to send first signaling to a second device. The first signaling is used to indicate target model information in a first model information set, and the first model information set is configured based on second signaling.

In an implementation, a sending period of the first signaling is less than or equal to a sending period of the second signaling.

In an implementation, the first signaling includes downlink control information (DCI), uplink control information (UCI), or a first medium access control (MAC) control element (CE).

In an implementation, the second signaling includes radio resource control (RRC) signaling and/or a second MAC CE.

In an implementation, the second signaling includes the first model information set. Each piece of model information in the first model information set includes an ID of a model corresponding to the piece of model information.

In an implementation, each piece of model information further includes attribute information of the model corresponding to the piece of model information.

In an implementation, the attribute information includes at least one of:
functional information of the model;
a frequency domain interval applicable to the model;
a spatial domain interval applicable to the model; or
a logical channel applicable to the model.

In an implementation, the first signaling includes an index of the target model information in the first model information set.

In an implementation, the second signaling includes multiple model information sets corresponding to different attribute information, and the multiple model information sets include the first model information set.

In an implementation, the first signaling includes a plurality of fields, the plurality of fields correspond to the plurality of model information sets one-to-one, and a first field corresponding to the first model information set in the plurality of fields is used to indicate the target model information.

In an implementation, the first signaling includes a plurality of fields corresponding to different attribute information, and the target model information corresponds to attribute information to which a first field in the plurality of fields corresponds.

In an implementation, the first field carries the index of the target model information in the first model information set.

In an implementation, the second signaling includes first configuration signaling and second configuration signaling. The first configuration signaling is used to configure a second model information set, and the second configuration signaling is used to determine the first model information set from the second model information set.

In an implementation, a sending period of the second configuration signaling is less than or equal to a sending period of the first configuration signaling.

In an implementation, the first model information set includes activated model information in the second model information set.

In an implementation, the first model information set includes: model information that is configured for first attribute information, in the second model information set.

In an implementation, the first communication module 1510 is further configured to:
receive the second configuration signaling from the second device; or
send the second configuration signaling to the second device.

In an implementation, the first communication module 1510 is further configured to:
receive the first configuration signaling from the second device; or
send the first configuration signaling to the second device.

In an implementation, the first communication module 1510 is further configured to:
receive first information from the second device, wherein the first information includes: information related to at least one model in the second device, and/or information related to an ability of the second device to perform model switching within the at least one model; and the at least one model includes a model corresponding to the target model information.

The first device 1500 according to the embodiment of the present disclosure can realize the corresponding function of the first device in the above-described method embodiment. The corresponding process, function, implementation, and beneficial effect of each module (sub-module, unit, component, etc.) in the first device 1500 can refer to the corresponding description in the above method embodiment, and will not be repeatedly described here. It should be noted that the functions described with respect to modules (sub-module, unit, component, etc.) in the first device 1500 according to the embodiment of the present disclosure may be implemented by different modules (sub-module, unit, component, etc.), or may be implemented by the same module (sub-module, unit, component, etc.).

FIG. 16 is a schematic block diagram of a second device 1600 according to an embodiment of the present disclosure. The second device 1600 may include a second communication module 1610.

The second communication module 1610 is configured to receive first signaling from a first device. The first signaling is used to indicate target model information in a first model information set, and the first model information set is configured based on second signaling.

In an implementation, a sending period of the first signaling is less than or equal to a sending period of the second signaling.

In an implementation, the first signaling includes at least one of DCI, UCI, or a first MAC CE.

In an implementation, the second signaling includes RRC signaling and/or a second MAC CE.

In an implementation, the second signaling includes the first model information set. Each piece of model information in the first model information set includes an ID of a model corresponding to the piece of model information.

In an implementation, each piece of model information further includes attribute information of the model corresponding to the piece of model information.

In an implementation, the attribute information includes at least one of:
functional information of the model;
a frequency domain interval applicable to the model;
a spatial domain interval applicable to the model; or
a logical channel applicable to the model.

In an implementation, the first signaling includes an index of the target model information in the first model information set.

In an implementation, the second signaling includes multiple model information sets corresponding to different attribute information, and the multiple model information sets include the first model information set.

In an implementation, the first signaling includes a plurality of fields, the plurality of fields correspond to the plurality of model information sets one-to-one, and a first field corresponding to the first model information set in the plurality of fields is used to indicate the target model information.

In an implementation, the first signaling includes a plurality of fields corresponding to different attribute information, and the target model information corresponds to attribute information to which a first field in the plurality of fields corresponds.

In an implementation, the first field carries the index of the target model information in the first model information set.

In an implementation, the second signaling includes first configuration signaling and second configuration signaling. The first configuration signaling is used to configure a second model information set, and the second configuration signaling is used to determine the first model information set from the second model information set.

In an implementation, a sending period of the second configuration signaling is less than or equal to a sending period of the first configuration signaling.

In an implementation, the first model information set includes activated model information in the second model information set.

In an implementation, the first model information set includes: model information that is configured for first attribute information, in the second model information set.

In an implementation, the second communication module 1610 is further configured to:
send the second configuration signaling to the first device; or
receive the second configuration signaling from the first device.

In an implementation, the second communication module 1610 is further configured to:
send the first configuration signaling to the first device; or
receive the first configuration signaling from the first device.

In an implementation, the second communication module 1610 is further configured to:
send first information to the first device, wherein the first information includes: information related to at least one model in the second device, and/or information related to an ability of the second device to perform model switching within the at least one model; and the at least one model includes a model corresponding to the target model information.

The second device 1600 according to the embodiment of the present disclosure can realize the corresponding function of the second device in the above-described method embodiment. The corresponding process, function, implementation, and beneficial effect of each module (sub-module, unit, component, etc.) in the second device 1600 can refer to the corresponding description in the above method embodiment, and will not be repeatedly described here. It should be noted that the functions described with respect to modules (sub-module, unit, component, etc.) in the second device 1600 according to the embodiment of the present disclosure may be implemented by different modules (sub-module, unit, component, etc.), or may be implemented by the same module (sub-module, unit, component, etc.).

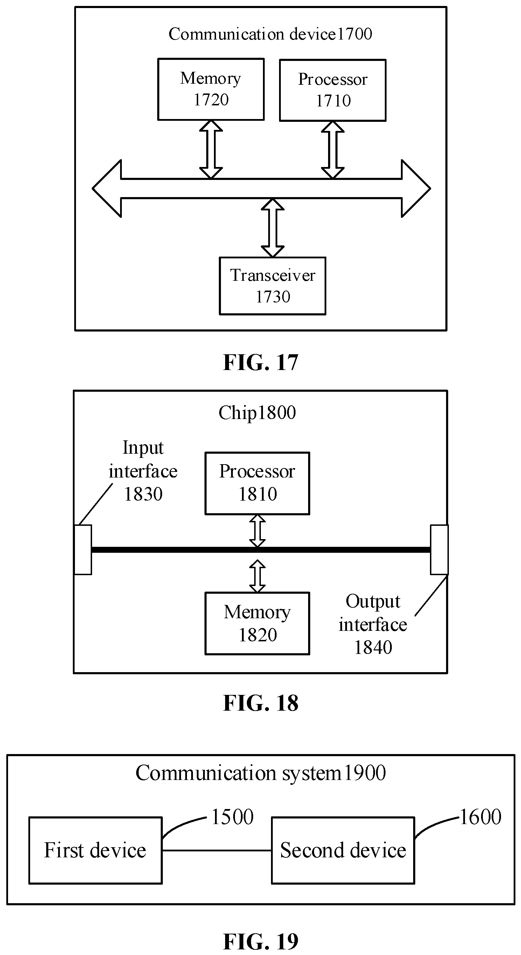

FIG. 17 is a schematic structure diagram of a communication device 1700 according to an embodiment of the present disclosure. The communication device 1700 includes a processor 1710. The processor 1710 may call and run a computer program from a memory, to cause the communication device 1700 to implement the method in the embodiment of the present disclosure.

In an implementation, the communication device 1700 may also include a memory 1720. The processor 1710 may call and run a computer program from the memory 1720, to cause the communication device 1700 to implement the method in the embodiment of the present disclosure.

The memory 1720 may be a separate device independent of the processor 1710, or may be integrated in the processor 1710.

In an implementation, the communication device 1700 may further include a transceiver 1730. The processor 1710 may control the transceiver 1730 to communicate with other devices, specifically, may send information or data to other devices, or receive information or data sent by other devices.

Here, the transceiver 1730 may include a transmitter and a receiver. The transceiver 1730 may further include antennas, and the number of antennas may be one or more.

In an implementation, the communication device 1700 may be applied to the first device according to the embodiment of the present disclosure. The communication device 1700 may realize the corresponding flow implemented by the first device in each method according to the embodiment of the present disclosure, and the description thereof will not be repeated here for the sake of brevity.

In an implementation, the communication device 1700 may be applied to the second device according to the embodiment of the present disclosure. The communication device 1700 may realize the corresponding flow implemented by the second device in each method according to the embodiment of the present disclosure, and the description thereof will not be repeated here for the sake of brevity.

FIG. 18 is a schematic structure diagram of a chip 1800 according to an embodiment of the present disclosure. The chip 1800 includes a processor 1810. The processor 1810 may call and run a computer program from a memory to implement the method in the embodiment of the present disclosure.

In an implementation, the chip 1800 may also include a memory 1820. The processor 1810 may call and run a computer program from the memory 1820, to implement the method executed by the terminal device or network device in the embodiment of the present disclosure.

The memory 1820 may be a separate device independent of the processor 1810, or may be integrated in the processor 1810.

In an implementation, the chip 1800 may also include an input interface 1830. The processor 1810 may control the input interface 1830 to communicate with other devices or chips, specifically, may acquire information or data sent by other devices or chips.

In an implementation, the chip 1800 may also include an output interface 1840. The processor 1810 may control the output interface 1840 to communicate with other devices or chips, specifically, may output information or data to other devices or chips.

In an implementation, the chip may be applied to the first device in the embodiment of the present disclosure, and the chip may realize the corresponding process implemented by the first device in each method according to the embodiment of the present disclosure, which is not described here for the sake of brevity.

In an implementation, the chip may be applied to the second device in the embodiment of the present disclosure, and the chip may realize the corresponding process implemented by the second device in each method according to the embodiment of the present disclosure, which is not described here for the sake of brevity.

The chip applied to the first device and the chip applied to the second device may be the same chip or different chips.

It should be understood that the chip mentioned in the embodiments of the present disclosure may also be referred to as a system level chip, a system chip, a chip system, or a system-on-chip (SoC).

The processor mentioned above may be a general-purpose processor, a digital signal processor (DSP), a field programmable gate array (FPGA), an application specific integrated circuit (ASIC) or other programmable logic device, a transistor logic device, a discrete hardware component, or the like. The aforementioned general-purpose processor may be a microprocessor, or may be any conventional processor or the like.

The aforementioned memory may be a volatile memory or a non-volatile memory, or may include both a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It is also understood that the memory described above is exemplary but not limiting, for example, the memory in the embodiments of the present disclosure may also be a static random access memory (SRAM), a dynamic random access memory (DRAM), a synchronous dynamic random access memory (SDRAM), a double data rate SDRAM (DDR SDRAM), an Enhanced SDRAM (ESDRAM), a synch link DRAM (SLDRAM), and a Direct Rambus RAM (DR RAM). That is, the memory in the embodiments of the present disclosure is intended to include, but is not limited to, these and any other suitable type of memory.

FIG. 19 is a schematic block diagram of a communication system 1900 according to an embodiment of the present disclosure. The communication system 1900 includes the first device 1500 and the second device 1600.

A first device 1500 sends first signaling to a second device 1600. The first signaling is used to indicate target model information in a first model information set, and the first model information set is configured based on second signaling.

The second device 1600 receives the first signaling from the first device 1500.

The first device 1500 may be used to implement the corresponding functions implemented by the first device in the above-described method, and the second device 1600 may be used to implement the corresponding functions implemented by the second device in the above-described method. For the sake of brevity, it will not be repeated here.

In the embodiments described above, it may be implemented in whole or in part by software, hardware, firmware, or any combination thereof. When implemented by using software, it may be implemented in whole or in part in the form of a computer program product. The computer program product includes one or more computer instructions. When the computer program instructions are loaded and executed on a computer, the processes or functions according to the embodiments of the present disclosure are generated in whole or in part. The computer may be a general purpose computer, a special purpose computer, a computer network, or other programmable apparatus. The computer instructions may be stored in a computer-readable storage medium or transmitted from one computer-readable storage medium to another computer-readable storage medium. For example, the computer instructions may be transmitted from one website site, computer, server, or data center to another website site, computer, server, or data center in the wired (e.g., coaxial cable, optical fiber, digital subscriber line (DSL)) or wireless (e.g., infrared, wireless, microwave, etc.) manner. The computer-readable storage medium may be any available medium accessible by a computer, or may be a data storage device such as a server, a data center, or the like that integrates one or more available media. The available medium may be a magnetic medium (e.g., a floppy disk, a hard disk, a magnetic tape), an optical medium (e.g., a DVD), or a semiconductor medium (e.g., a solid state disk (SSD)), etc.

It should be understood that in various embodiments of the present disclosure, the size of the sequence number in the above-described process does not mean the sequence of execution (the sequence of execution in each process should be determined by its function and internal logic), and should not constitute any limitation on the implementation of the embodiments of the present disclosure.

Those skilled in the art can clearly understand that for convenience and conciseness of the description, the specific working processes of the system, devices and units described above can refer to the corresponding processes in the aforementioned method embodiments, and will not be repeatedly described here.

The above are merely detailed embodiments of the present disclosure, but the protection scope of the present disclosure is not limited thereto, and any person skilled in the art can easily think of changes or substitutions within the technical scope disclosed in the present disclosure, which should be covered within the protection scope of the present disclosure. Therefore, the protection scope of the present disclosure should be based on the protection scope of the claims.

## Claims

1. A method for indicating information, comprising:
sending, by a first device, first signaling to a second device, wherein the first signaling is used to indicate target model information in a first model information set, and the first model information set is configured based on second signaling.

2. The method of claim 1, wherein a sending period of the first signaling is less than or equal to a sending period of the second signaling.

3. The method of claim 1 or 2, wherein the first signaling comprises: downlink control information (DCI), uplink control information (UCI), or a first medium access control (MAC) control element (CE).

4. The method of any one of claims 1-3, wherein the second the signaling comprises radio resource control (RRC) signaling and/or a second MAC CE.

5. The method of any one of claims 1-4, wherein the second signaling comprises the first model information set, and each piece of model information in the first model information set comprises an Identifier (ID) of a model corresponding to the piece of model information.

6. The method of claim 5, wherein each piece of model information further comprises attribute information of the model corresponding to the piece of model information.

7. The method of claim 6, wherein the attribute information comprises at least one of:
functional information of the model;
a frequency domain interval applicable to the model;
a spatial domain interval applicable to the model; or
a logical channel applicable to the model.

8. The method of any one of claims 1-7, wherein the first signaling comprises an index of the target model information in the first model information set.

9. The method of any one of claims 1-8, wherein the second signaling comprises a plurality of model information sets corresponding to different attribute information, and the plurality of model information sets comprise the first model information set.

10. The method of claim 9, wherein the first signaling comprises a plurality of fields, the plurality of fields correspond to the plurality of model information sets one-to-one, and a first field corresponding to the first model information set in the plurality of fields is used to indicate the target model information.

11. The method of any one of claims 1-8, wherein the first signaling comprises a plurality of fields corresponding to different attribute information, and the target model information corresponds to attribute information to which a first field in the plurality of fields corresponds.

12. The method of claim 10 or 11, wherein the first field carries an index of the target model information in the first model information set.

13. The method of any one of claims 1-12, wherein the second signaling comprises first configuration signaling and second configuration signaling, the first configuration signaling is used to configure a second model information set, and the second configuration signaling is used to determine the first model information set from the second model information set.

14. The method of claim 13, wherein a sending period of the second configuration signaling is less than or equal to a sending period of the first configuration signaling.

15. The method of claim 13 or 14, wherein the first model information set comprises activated model information in the second model information set.

16. The method of any one of claims 13-15, wherein the first model information set comprises: model information that is configured for first attribute information, in the second model information set.

17. The method of any one of claims 13-16, wherein before sending, by the first device, the first signaling to the second device, the method further comprises:
receiving, by the first device, the second configuration signaling from the second device; or
sending, by the first device, the second configuration signaling to the second device.

18. The method of any one of claims 13-17, wherein before sending, by the first device, the first signaling to the second device, the method further comprises:
receiving, by the first device, the first configuration signaling from the second device; or
sending, by the first device, the first configuration signaling to the second device.

19. The method of any one of claims 1-18, wherein before sending, by the first device, the first signaling to the second device, the method further comprises:
receiving, by the first device, first information from the second device, wherein the first information comprises: information related to at least one model in the second device, and/or information related to an ability of the second device to perform model switching within the at least one model; and the at least one model comprises a model corresponding to the target model information.

20. A method for indicating information, comprising:
receiving, by a second device, first signaling from a first device, wherein the first signaling is used to indicate target model information in a first model information set, and the first model information set is configured based on second signaling.

21. The method of claim 20, wherein a sending period of the first signaling is less than or equal to a sending period of the second signaling.

22. The method of claim 20 or 21, wherein the first signaling comprises: downlink control information (DCI), uplink control information (UCI), or a first medium access control (MAC) control element (CE).

23. The method of any one of claims 20-22, wherein the second the signaling comprises radio resource control (RRC) signaling and/or a second MAC CE.

24. The method of any one of claims 20-23, wherein the second signaling comprises the first model information set, and each piece of model information in the first model information set comprises an Identifier (ID) of a model corresponding to the piece of model information.

25. The method of claim 24, wherein each piece of model information further comprises attribute information of the model corresponding to the piece of model information.

26. The method of claim 25, wherein the attribute information comprises at least one of:
functional information of the model;
a frequency domain interval applicable to the model;
a spatial domain interval applicable to the model; or
a logical channel applicable to the model.

27. The method of any one of claims 20-26, wherein the first signaling comprises an index of the target model information in the first model information set.

28. The method of any one of claims 20-27, wherein the second signaling comprises a plurality of model information sets corresponding to different attribute information, and the plurality of model information sets comprise the first model information set.

29. The method of claim 28, wherein the first signaling comprises a plurality of fields, the plurality of fields correspond to the plurality of model information sets one-to-one, and a first field corresponding to the first model information set in the plurality of fields is used to indicate the target model information.

30. The method of any one of claims 20-27, wherein the first signaling comprises a plurality of fields corresponding to different attribute information, and the target model information corresponds to attribute information to which a first field in the plurality of fields corresponds.

31. The method of claim 29 or 30, wherein the first field carries an index of the target model information in the first model information set.

32. The method of any one of claims 20-31, wherein the second signaling comprises first configuration signaling and second configuration signaling, the first configuration signaling is used to configure a second model information set, and the second configuration signaling is used to determine the first model information set from the second model information set.

33. The method of claim 32, wherein a sending period of the second configuration signaling is less than or equal to a sending period of the first configuration signaling.

34. The method of claim 32 or 33, wherein the first model information set comprises activated model information in the second model information set.

35. The method of any one of claims 32-34, wherein the first model information set comprises: model information that is configured for first attribute information, in the second model information set.

36. The method of any one of claims 32-35, wherein before receiving, by the second device, the first signaling from the first device, the method further comprises:
sending, by the second device, the second configuration signaling to the first device; or
receiving, by the second device, the second configuration signaling from the first device.

37. The method of any one of claims 32-36, wherein before receiving, by the second device, the first signaling from the first device, the method further comprises:
sending, by the second device, the first configuration signaling to the first device; or
receiving, by the second device, the first configuration signaling from the first device.

38. The method of any one of claims 20-37, wherein before receiving, by the second device, the first signaling from the first device, the method further comprises:
sending, by the second device, first information to the first device, wherein the first information comprises: information related to at least one model in the second device, and/or information related to an ability of the second device to perform model switching within the at least one model; and the at least one model comprises a model corresponding to the target model information.

39. A first device, comprising:
a first communication module, configured to send first signaling to a second device, wherein the first signaling is used to indicate target model information in a first model information set, and the first model information set is configured based on second signaling.

40. The first device of claim 39, wherein a transmission period of the first signaling is less than or equal to a transmission period of the second signaling.

41. The first device of claim 39 or 40, wherein the first signaling comprises: downlink control information (DCI), uplink control information (UCI), or a first medium access control (MAC) control element (CE).

42. The first device of any one of claims 39-41, wherein the second the signaling comprises radio resource control (RRC) signaling and/or a second MAC CE.

43. The first device of any one of claims 39-42, wherein the second signaling comprises the first model information set, and each piece of model information in the first model information set comprises an Identifier (ID) of a model corresponding to the piece of model information.

44. The first device of claim 43, wherein each piece of model information further comprises attribute information of the model corresponding to the piece of model information.

45. The first apparatus of claim 44, wherein the attribute information comprises at least one of: functional information of the model; a frequency domain interval applicable to the model; a spatial domain interval applicable to the model; or a logical channel applicable to the model.

46. The first device of any one of claims 39-45, wherein the first signaling comprises an index of the target model information in the first model information set.

47. The first device of any one of claims 39-46, wherein the second signaling comprises a plurality of model information sets corresponding to different attribute information, and the plurality of model information sets comprise the first model information set.

48. The first device of claim 47, wherein the first signaling comprises a plurality of fields, the plurality of fields correspond to the plurality of model information sets one-to-one, and a first field corresponding to the first model information set in the plurality of fields is used to indicate the target model information.

49. The first device of any one of claims 39-46, wherein the first signaling comprises a plurality of fields corresponding to different attribute information, and the target model information corresponds to attribute information to which a first field in the plurality of fields corresponds.

50. The first device of claim 48 or 49, wherein the first field carries an index of the target model information in the first model information set.

51. The first device of any one of claims 39-50, wherein the second signaling comprises first configuration signaling and second configuration signaling, the first configuration signaling is used to configure a second model information set, and the second configuration signaling is used to determine the first model information set from the second model information set.

52. The first device of claim 51, wherein a sending period of the second configuration signaling is less than or equal to a sending period of the first configuration signaling.

53. The first device of claim 51 or 52, wherein the first model information set comprises activated model information in the second model information set.

54. The first device of any one of claims 51-53, wherein the first model information set comprises: model information that is configured for first attribute information, in the second model information set.

55. The first device of any one of claims 51-54, wherein the first communication module is further configured to:
receive the second configuration signaling from the second device; or
send the second configuration signaling to the second device.

56. The first device of any one of claims 51-55, wherein the first communication module is further configured to:
receive the first configuration signaling from the second device; or
send the first configuration signaling to the second device.

57. The first device of any one of claims 39-56, wherein the first communication module is further configured to:
receive first information from the second device, wherein the first information comprises: information related to at least one model in the second device, and/or information related to an ability of the second device to perform model switching within the at least one model; and the at least one model comprises a model corresponding to the target model information.

58. A second device, comprising:
a second communication module, configured to receive first signaling from a first device, wherein the first signaling is used to indicate target model information in a first model information set, and the first model information set is configured based on second signaling.

59. The second device of claim 58, wherein a transmission period of the first signaling is less than or equal to a transmission period of the second signaling.

60. The second device of claim 58 or 59, wherein the first signaling comprises: downlink control information (DCI), uplink control information (UCI), or a first medium access control (MAC) control element (CE).

61. The second device of any one of claims 58-60, wherein the second the signaling comprises radio resource control (RRC) signaling and/or a second MAC CE.

62. The second device of any one of claims 58-61, wherein the second signaling comprises the first model information set, and each piece of model information in the first model information set comprises an Identifier (ID) of a model corresponding to the piece of model information.

63. The second device of claim 62, wherein each piece of model information further comprises attribute information of the model corresponding to the piece of model information.

64. The second device of claim 63, wherein the attribute information comprises at least one of: functional information of the model; a frequency domain interval applicable to the model; a spatial domain interval applicable to the model; or a logical channel applicable to the model.

65. The second device of any one of claims 58-64, wherein the first signaling comprises an index of the target model information in the first model information set.

66. The second device of any one of claims 58-65, wherein the second signaling comprises a plurality of model information sets corresponding to different attribute information, and the plurality of model information sets comprise the first model information set.

67. The second device of claim 66, wherein the first signaling comprises a plurality of fields, the plurality of fields correspond to the plurality of model information sets one-to-one, and a first field corresponding to the first model information set in the plurality of fields is used to indicate the target model information.

68. The second device of any one of claims 58-65, wherein the first signaling comprises a plurality of fields corresponding to different attribute information, and the target model information corresponds to attribute information to which a first field in the plurality of fields corresponds.

69. The second device of claim 67 or 68, wherein the first field carries an index of the target model information in the first model information set.

70. The second device of any one of claims 58-69, wherein the second signaling comprises first configuration signaling and second configuration signaling, the first configuration signaling is used to configure a second model information set, and the second configuration signaling is used to determine the first model information set from the second model information set.

71. The second device of claim 70, wherein a sending period of the second configuration signaling is less than or equal to a sending period of the first configuration signaling.

72. The second device of claim 70 or 71, wherein the first model information set comprises activated model information in the second model information set.

73. The second device of any one of claims 70-72, wherein the first model information set comprises: model information that is configured for first attribute information, in the second model information set.

74. The second device of any one of claims 70-73, wherein the second communication module is further configured to:
send the second configuration signaling to the first device; or
receive the second configuration signaling from the first device.

75. The second device of any one of claims 70-74, wherein the second communication module is further configured to:
send the first configuration signaling to the first device; or
receive the first configuration signaling from the first device.

76. The second device of any one of claims 58-75, wherein the second communication module is further configured to:
send first information to the first device, wherein the first information comprises: information related to at least one model in the second device, and/or information related to an ability of the second device to perform model switching within the at least one model; and the at least one model comprises a model corresponding to the target model information.

77. A first device, comprising: a transceiver, a processor and a memory, wherein the memory is used for storing a computer program, the transceiver is used for communicating with other devices, and the processor is used for calling and running the computer program stored in the memory to cause the first device to perform the method of any one of claims 1-19.

78. A second device, comprising: a transceiver, a processor and a memory, wherein the memory is used for storing a computer program, the transceiver is used for communicating with other devices, and the processor is used for calling and running the computer program stored in the memory to cause the second device to perform the method of any one of claims 20-38.

79. A chip, comprising: a processor for calling and running a computer program in a memory, to cause a device on which the chip is mounted to perform the method of any one of claims 1-19.

80. A chip, comprising: a processor for calling and running a computer program in a memory, to cause a device on which the chip is mounted to perform the method of any one of claims 20-38.

81. A computer readable storage medium, having stored thereon a computer program that, when executed by a device, causes the device to perform the method of any one of claims 1-19.

82. A computer readable storage medium, having stored thereon a computer program that, when executed by a device, causes the device to perform the method of any one of claims 20-38.

83. A computer program product, comprising: computer program instructions that cause a computer to perform the method of any one of claims 1-19.

84. A computer program product, comprising: computer program instructions that cause a computer to perform the method of any one of claims 20-38.

85. A computer program, causing a computer to perform the method of any one of claims 1-19.

86. A computer program, causing a computer to perform the method of any one of claims 20-38.

87. A communication system, comprising:
a first device for performing the method of any one of claims 1-19; and
a second device for performing the method of any one of claims 20-38.
